# EUROPEAN PATENT APPLICATION

(11) **EP 4 610 431 A1**
(43) Date of publication of application: **03.09.2025**
(21) Application number: 25160118.3
(22) Date of filing: 25.02.2025
(51) Int. Cl.: E02B 3/04, E02B 3/06, E02B 9/08, F03B 13/22

(54) **MULTIFUNCTIONAL BIO INSPIRED SYSTEM FOR COASTLINES PROTECTION AND ENERGY PRODUCTION**

(30) Priority: 27.02.2024 IT 202400004192
(71) Applicant: Mele, Antonio, 80026 Casoria Napoli (IT); Fotosun Srl, 81031 Aversa (CE) (IT); Università degli Studi della Campania "Luigi Vanvitelli", 81100 Caserta (CE) (IT)
(72) Inventor: MELE, Antonio, 80026 Casoria Napoli (IT); BUONO, Mario, Napoli (IT); VICINANZA, Diego, Milano (IT); CONTESTABILE, Pasquale, Caserta (IT); CAPECE, Sonia, Aversa (IT); PERRICONE, Valentina, Napoli (IT)

(57) **Abstract**

A bio-inspired system for coastline protection that surpasses the current state of the art in maritime works. It is characterized by additional functionalities compared to existing protection systems, including the production of electricity by harnessing wave motion from all directions and suitability for different sea conditions. The system offers maximum installation flexibility, high adaptability to seabeds, seamless integration into marine ecosystems, and efficient wave energy dissipation to reduce impacts on coastlines.

## Description

### Field of invention

The present invention concerns a multifunctional bio-inspired system for coastline protection, characterized by additional functionalities compared to existing protection systems, such as: renewable energy production through the conversion of omnidirectional wave motion energy into kinetic energy or electricity; the ability to self-adapt to different sea conditions; high installation flexibility and reversibility; high adaptability to the seabed; high integration capacity within the marine ecosystem; reduction of meteorological and marine forces and related effects on coastlines to control erosion and flooding phenomena.

The invention pertains to the field of coastal maritime works, embankments, and coastal breakwaters, with the objective of reducing the energy of waves reaching the coast to preserve the stability of coastlines and beaches, reduce wave run-up levels, and mitigate flooding risks caused by storm surges and strong marine currents.

In particular, the object of the invention consists of the definition of modular units that allow efficient dissipation of wave energy, reducing its effects on coastlines. The modularity of the invention's object allows the creation of various configurations of variable dimensions, which can be installed on the coast, maintained in a short time, and easily dismantled, reused, and repositioned according to specific needs with reduced environmental impact.

### State of the art

In recent years, there has been an increase in hydrogeological instability phenomena such as coastal erosion: sedimentary deficit combined with the intensification of meteorological and marine phenomena is degrading coastlines, favoring coastal instability.

In fact, according to data collected by Legambiente, from 1970 to 2020, approximately 50% of sandy coastlines have been lost.

The coastline includes "sensitive" areas from an environmental, social, and economic point of view, where the environmental impact of constructions is significant, such as the exploitation of quarries, the transport of inert materials, the dumping of materials into the sea, etc.

Such phenomena are also a consequence of climate change caused by CO₂ emissions resulting from the increased energy demand and electricity production.

Currently, coastlines are protected by devices and breakwater barriers that counter the phenomenon of coastal erosion by reducing the intensity of waves, altering coastal currents, and the dynamics of erosion and sediment deposition in waters near the coastline.

Sometimes, the use of these breakwater systems in coastal maritime works reveals problems arising from the environmental impact during construction and demolition phases, such as the release of material residues scattered over the submerged beach.

From the review of the state of the art, the following are noted:
- Systems for coastal defense;
- Existing coastline protection systems equipped with technologies for energy production from wave motion.

Among the coastal defense systems, the following patents stand out:
- The patent (WO2013081352A1, 2012) *"Submerged breakwater block for coastal erosion protection and construction method using same"* characterized by a submerged breakwater block for protection from coastal erosion;
- The patent *"Shoreline breakwater"* (US4502816, 1985), characterized by a prefabricated submerged dam module constructed by assembling a series of triangular prismatic units to partially attenuate wave energy;
- The patent *"Prefabricated anti-erosion wall"* (US4818141, 1989), proposing a dam composed of prefabricated units of roughly triangular shape with one face concave toward the sea to break waves and deposit sediments in the rear zone;
- The patent *"Submerged breakwater and barrier reef"* (US5120156, 1992), proposing the construction of submerged barrier dams combining concave-shaped concrete units facing the seabed and convex toward the sea and coast to dissipate energy while protecting the coast;
- The patent *"Submerged breakwater for use as a perch for sand retention"* (US5238326, 1993) proposing a triangular module similar to the "Shoreline breakwater" (US4502816, 1985), with two spaced concave channels extending vertically and connecting to respective openings in the upper part of the module. The concave channels direct backwash water through the openings in the upper part of the module, and these high-pressure flows allow the backwash water to pass toward the sea above the breakwater.

The above-mentioned patents related to coastal defense systems, known in the state of the art, are realized through concrete works similar to conventional breakwaters. The effectiveness of these dams largely depends on the depth of the crest or freeboard, where a simple settlement of the structure could drastically alter its functioning. Thus, in the event of unforeseen modifications or adaptations, restoring correct functionality would be costly.

Moreover, these structures have the advantage of reducing the energy with which waves break on the coast but are visually impactful, have high production, transportation, and installation costs, and negatively affect the balance of the ecosystem and marine biocoenosis.

Among the existing coastline protection systems equipped with technologies for energy production from wave motion, the following patents stand out:

The patent *"Scheme for harnessing hydroundulatory power"* (US 4249084, 1981-02-03), characterized by a device referred to as "Scheme for harnessing hydroundulatory power," which captures wave energy from seas and lakes, storing it as potential energy to convert into kinetic and mechanical energy for electricity production. An additional advantage is the creation of a cost-effective water source, unsuitable for human or agricultural consumption but ideal for public uses such as firefighting, crowd control, cleaning parks, roads, and other services, thus reducing the use of treated and expensive freshwater.

The patent *"Wave power energy generation apparatus"* (US 8004105 B2, 2011), characterized by a wave motion energy conversion device to be used in shallow waters. It includes a base for anchoring to the waterbody floor and a vertically positioned flap connected to the base. The flap, oriented perpendicularly to the base, oscillates in response to wave motion, activating the mechanism for energy production.

The patent "Artificial coastal-protection reef with energy unit with or without direct contact with seawater" (EP3078844B1), characterized by an artificial barrier for coastal protection, including an energy generation unit with or without direct contact with seawater.

The patented systems described above protect the coast and feature technologies for generating electricity from wave motion. However, they are invasive and have a design that makes water permeability challenging, favoring water stagnation near the coastline. Additionally, in the event of unforeseen circumstances, maintenance becomes complex and costly.

The objective of the invention is to overcome the limitations of the known techniques by providing a multifunctional bio-inspired system for coastline protection that allows:
(a) The production of energy by harnessing wave motion from all directions, suitable for different sea conditions;
(b) Reduction of wave effects on coastlines by efficiently dissipating wave energy;
(c) Maximum installation flexibility;
(d) High adaptability to seabeds;
(e) Integration into the marine ecosystem.

### Technical Problem to Solve

The proposed solution is a multifunctional bio-inspired system for coastline protection and energy production that surpasses the state of the art in the field of maritime works. It consists of: A pylon (1); An external shell with two or more concave sides (1a); An internal cavity serving as a housing (1b) for the subsystem for electricity production (1d); One or more spherical hinges (1c); An anchoring system positioned on the seabed, comprising aggregated modules (4) and a reticular structure anchored to the system (10).

The pylon (1) can be equipped, for example, with an additional floating terminal (5) positioned at the top for light and sound signals, monitoring, and pylon protection.

The invention is designed to allow the creation of a modular system capable of forming interstices of varying dimensions between the modules, serving as "ecological spaces" to facilitate the colonization of marine species.

Therefore, the system, in addition to protecting beaches and coastlines, can enrich the marine habitat, improve ichthyofauna productivity, and increase the stability of marine ecosystems.

Unlike conventional loose-material dams and prefabricated single-section embankments, the new modular system allows for a plurality of configurations of dams and breakwaters suitable for different sea conditions. In addition to the energy absorbed by the conversion system (1d), the system enables the residual wave energy (8) to be partially reflected within the modular structure itself and partially dissipated through friction, turbulence, and wave breaking among the various elements.

This will allow a reduction in the incident wave force near the coastline (7), while also enabling the adjustment of current regimes and sediment deposition, similar to conventional offshore dams.

### Brief Description of the Drawings

A better understanding of the invention will be achieved with the following detailed description and with reference to the attached figures, which illustrate, by way of example and not limitation, a preferred embodiment of the invention.

However, the described embodiment is not intended to limit the invention but is provided to ensure this description is complete and conveys the full inventive concept as well as the scope of the invention to experts in the field.

In the drawings:

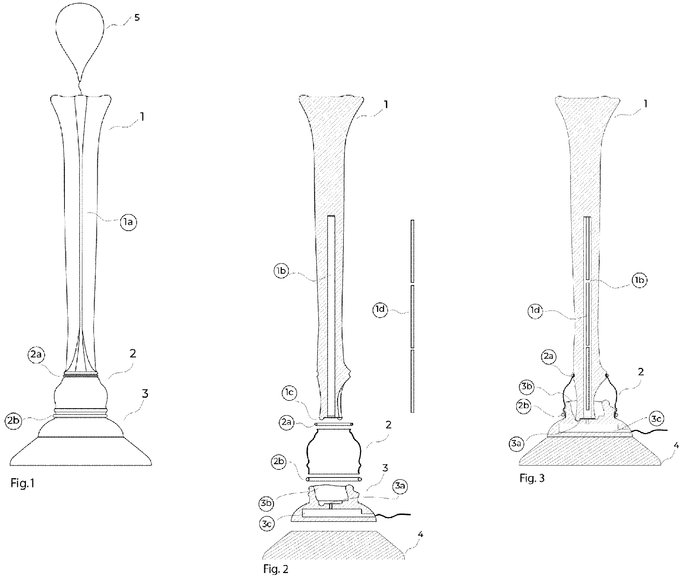

**Figure 1****)** shows a possible configuration of the invention with the addition of the floating terminal (5) positioned at the top for light and sound signals, monitoring, activation of the energy production subsystem, and pylon protection.
**Figures 2) and 3****)** show a schematic section of the components of the "multifunctional bio-inspired system for coastline protection and energy production" in a preferred embodiment.

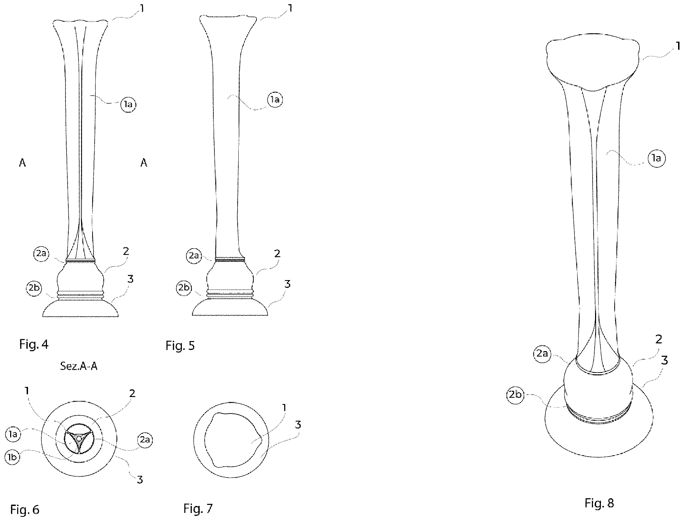

**Figures 4) and 5****)** show the "multifunctional bio-inspired system for coastline protection and energy production" in front and side views.
**Figure 6****)** shows the horizontal cross-section, top view of the invention, highlighting the internal cavity serving as the housing (1b) for the energy production subsystem (1d) inside the pylon (1).
**Figure 7****)** shows the top plan view in a preferred embodiment of the "multifunctional bio-inspired system for coastline protection and energy production."
**Figure 8****)** shows an isometric view of the "multifunctional bio-inspired system for coastline protection and energy production" in the preferred embodiment.

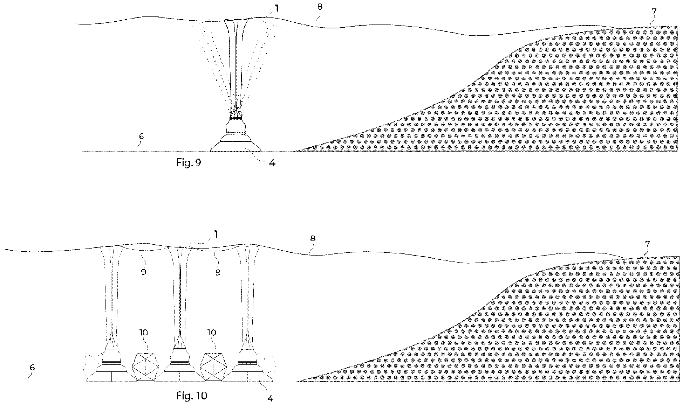

**Figure 9****)** shows some of the operational modes of the invention in contact with the wave front (8).
**Figure 10****)** shows a possible modular aggregation of the invention, including anchoring elements (9) between the modules positioned at the top of the pylons (1); a network consisting of one or more modular support elements (10) and anchoring modules to the seabed (4) of the "multifunctional bio-inspired system for coastline protection and energy production."

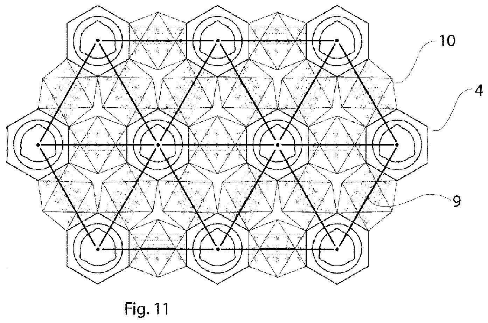

**Figure 11****)** shows one of the possible configurations/aggregations of the modules of the "multifunctional bio-inspired system for coastline protection and energy production.

### Detailed Description of the Invention

As mentioned earlier, the invention is a multifunctional bio-inspired system for the protection of coastlines and energy production.

Specifically, the system consists of:
- A pylon (1);
- A protective cap (2);
- A base for the housing, control, management, and operation of the device (3);
- An anchoring module (4).

Specifically, the pylon (1) features on its external shell two or more vertically concave sides (1a) designed to reduce wave energy near the coastlines (7). In particular, the concave shape of the external shell (1a) is developed vertically and is inspired by the geometries of marine microorganisms, such as diatoms, and the functional principles of marine seagrasses.

The pylon (1) also has an internal cavity (1b) serving as the housing for the device/subsystem (1d) for electricity production.

The function of the pylon (1) takes direct inspiration from marine seagrasses, which play a fundamental role in local coastal protection by actively interacting with wave motion, current flow, and sediment dynamics. Seagrass meadows can reduce current velocities and dissipate wave energy through the deflation of water flow caused by friction effects within the vegetation canopy, where longitudinal advection and turbulence phenomena are generated. The density, biomass, submergence ratio (canopy height/water depth), and rigidity of seagrass leaves can influence their hydrodynamic effects.

Additionally, the pylon (1) is formally inspired by diatoms, photosynthetic unicellular algae, and marine seagrasses.

In fact, the shape of the pylon (1), inspired by diatoms and marine seagrasses, allows it to reduce wave energy near the coastlines (7) and harness the energy to convert it into electricity through a device (1d) housed in the cavity (1b) inside the pylon (1).

This energy production occurs through a converter device (1d), for example, a mechatronic system with elastic and hydraulic parts that activate one or more components such as turbines or dynamos using digital piezoelectric technologies or other methods.

The pylon (1) can also be equipped at the top, for example, with an additional floating terminal (5) for light and sound signals, monitoring, activation of the energy production subsystem, and pylon protection.

The entire multifunctional bio-inspired system for coastline protection and energy production also includes spherical hinges (1c) consisting of one or more spherical elements that allow the pylon (1) to move with various degrees of inclination following wave motion.

Between the pylon (1) and the base (3) is a protective cap (2) designed to protect the spherical hinges (1c), the rotation mechanism, and the fastening components from wear caused by abiotic and biotic agents.

At the base (3) of the multifunctional bio-inspired system, there is a structure that allows, in the upper part, the housing (3a) of the pylon (1), a tilt guide element (3b) with the function of constraining and supporting the inclination of the pylon (1), and in the lower part, the control and management of the system's operation through the housing of management, control, and energy network integration components in the hollow internal space (3c).

The anchoring module (4) serves to anchor the system by adapting to the seabed's morphology (6), ensuring stability for the entire system.

The multifunctional bio-inspired system can be fixed to the seabed via an anchoring network consisting of one or more modular support elements (10), enabling configurations to create one or more "reforestation systems" for marine flora, and one or more mechanical elements composed of one or more stakes/pins for anchoring to the seabed (6), which are also useful for providing stability to the multifunctional bio-inspired system for coastline protection.

Formal and structural variations may be made to the idea of the solution within the same inventive concept, which remains defined by the claims that follow. This is all according to what is described and with reference to the attached drawings.

This multifunctional bio-inspired system for coastline protection and energy production has been designed to perform the following functionalities:
- Reduction of wave effects on coastlines by efficiently dissipating/absorbing/converting wave motion energy;
- Production of energy by harnessing wave motion from different types of waves (free, forced, oscillatory, translatory, short, and long waves);
- Maximum installation flexibility.
- High adaptability to seabeds;
- High capacity for integration into the marine ecosystem.

## Claims

1. A multifunctional bio-inspired system for coastline protection and energy production, comprising:
- A pylon (1) externally **characterized by** two or more vertically concave sides (1a), whose curvilinear configuration is developed vertically; an internal cavity (1b) serving as a housing for the subsystem/device for electricity production (1d); and spherical hinges (1c) that allow the pylon (1) to tilt in multiple directions relative to its center, following wave motion.
- A protective cap (2) **characterized by** an upper cap holder (2a) for attachment to the pylon (1) and a lower cap holder (2b) fixed to the base (3), designed to protect the rotation mechanism and fastening components from wear caused by abiotic and biotic agents.
- A base (3) **characterized by** a structure that allows, in its upper part, the housing (3a) of the pylon (1), a tilt guide element (3b) for constraining and supporting the tilt of the pylon (1), and, within its internal hollow space (3c), the components for managing and controlling the operation of the bio-inspired system for coastline protection and energy production.
- An anchoring module (4) enabling the fixation of the system in its upper part and anchoring it to the seabed (6) using one or more mechanical elements. The individual modules can be connected to each other, allowing configurations that create one or more "reforestation systems" for marine flora.

2. The multifunctional bio-inspired system for coastline protection and energy production, as in the previous claim, is **characterized by** a pylon (1) with two or more concave sides (1a), whose curvilinear configuration is developed vertically and is inspired by the geometries of marine microorganisms, such as diatoms, and the functional principles of marine seagrasses. This configuration allows for the reduction of marine current speeds and the dissipation/absorption of wave energy through water flow deflation.

3. The pylon (1), as in the previous claims, is **characterized by** an internal cavity that serves as a housing (1b) for the subsystem/device for electricity production (1d), designed to convert the energy of waves near the coastline into kinetic energy to be transformed into electricity. The pylon (1) also contains the subsystem for energy production (1d), **characterized by**, for example, conversion devices or mechatronic systems with elastic and/or hydraulic components that activate one or more elements, such as turbines and/or dynamos, leveraging, for instance, digital piezoelectric technologies.

4. The pylon (1), as in the previous claims, can optionally be equipped in its upper part with an additional floating terminal (5) for light and sound signals, monitoring, activation of the energy production subsystem, pylon protection, etc.

5. The pylon (1), as in the previous claims, is **characterized by** spherical hinges (1c) that enable the rotation of the pylon (1) with multiple degrees of freedom, facilitating tilting in various directions from the center of the system and the activation of the integrated subsystem for energy transformation (1d).

6. The multifunctional bio-inspired system for coastline protection and energy production, as in the previous claims, is **characterized by** a protective cap (2) designed to mechanically protect the spherical hinges (1c), rotation mechanism, and fastening components from wear caused by abiotic and biotic agents, and by cap holders (2a, 2b) that enable the protective cap (2) to be attached to the pylon (1) and the base (3).

7. The multifunctional bio-inspired system for coastline protection and energy production, as in the previous claims, comprises a base (3) featuring a tilt guide element (3b) designed to constrain and support the tilt of the pylon (1). The base (3) contains an internal hollow space (3c) for housing the components and fastening elements of the system's parts.

8. The multifunctional bio-inspired system for coastline protection and energy production, as in the previous claims, includes an anchoring module (4) designed to anchor to the seabed (6) by adapting to its morphology, ensuring greater stability for the entire system.

9. The multifunctional bio-inspired system for coastline protection and energy production, as in the previous claims, is **characterized by** modular units that efficiently dissipate, absorb, and transform wave energy, thereby reducing its impact on the coastline. This system aims to preserve the stability of beaches, reduce wave run-up, and improve safety conditions against coastal flooding caused by wave motion and strong marine currents.

10. The multifunctional bio-inspired system for coastline protection and energy production, as in the previous claims, is configured as an aggregable modular system to be flexibly assembled along coastlines. This modular configuration allows for the creation of interstices of varying sizes between the modules, serving as "ecological spaces" to promote the settlement of marine species by providing them with a suitable environment for habitation and refuge.
